# EUROPEAN PATENT APPLICATION

(11) **EP 4 462 954 A1**
(43) Date of publication of application: **13.11.2024**
(21) Application number: 23798320.0
(22) Date of filing: 16.10.2023
(51) Int. Cl.: H05B 45/30, H05B 45/50

(54) **TRAFFIC LIGHT CONTROL SYSTEM AND CONTROL METHOD**

(30) Priority: 22.03.2023 CN 202310286967
(71) Applicant: CRSC RESEARCH & DESIGN INSTITUTE GROUP CO., LTD., Fengtai District Beijing 100070 (CN)
(72) Inventor: ZHANG, Fusong, Beijing 100070 (CN); SUN, Guoying, Beijing 100070 (CN); JIANG, Xiaojun, Beijing 100070 (CN); XING, Qi, Beijing 100070 (CN); HAI, Ning, Beijing 100070 (CN); HAN, Lujie, Beijing 100070 (CN); LIU, Pei, Beijing 100070 (CN); LV, Yuanyuan, Beijing 100070 (CN); ZHANG, Hao, Beijing 100070 (CN); LIU, Ruidong, Beijing 100070 (CN); ZHANG, Zhonghong, Beijing 100070 (CN); QI, Ying, Beijing 100070 (CN)
(74) Representative: Haseltine Lake Kempner LLP
(86) International application number: PCT/CN2023/124642
(87) International publication number: WO 2024/193012

(57) **Abstract**

The embodiments of the present invention disclose a signal lamp control system and control method. The signal lamp control system comprises a control module, a driving module and a signal lamp; wherein the control module comprises a controller, the driving module comprises a relay unit and a current acquisition unit, the relay unit and the current acquisition unit both are electrically connected to the controller, and the relay unit and the current acquisition unit are electrically connected to the signal lamp; the current acquisition unit is used for acquiring a current signal of the signal lamp, and the controller is used for determining a operating state of the signal lamp according to the current signal and controlling the operating state of the signal lamp through the relay unit. The signal lamp control system and control method provided by the embodiments of the present invention can improve control reliability.

## Description

### TECHNICAL FIELD

The embodiments of the present invention relate to signal control technologies, in particular to a signal lamp control system and control method.

### BACKGROUND

In the field of transportation, such as railway, the signal display system is an important signal equipment to ensure the safety of railway traffic. The whole system integrates AC power supply, filament lighting relay, filament relay, fault alarm, outdoor signal lamp load and lightning protection devices. The filament lighting relay is driven by the control command issued by a train control interlock system to complete the signal display function, where signal lamps need reliable control.

At present, the existing signal lamp control systems usually evaluate whether the signal load, i.e., the signal lamp, operates normally by only the filament relay, and has the problem of low control reliability.

### SUMMARY OF THE INVENTION

The embodiments of the invention provide a signal lamp control system and control method to improve control reliability.

In the first aspect, the embodiment of the invention provides a signal lamp control system comprising a control module, a driving module and a signal lamp;
wherein the control module comprises a controller, the driving module comprises a relay unit and a current acquisition unit, the relay unit and the current acquisition unit are electrically connected to the controller, and the relay unit and the current acquisition unit are electrically connected to the signal lamp; the current acquisition unit is used for collecting a current signal of the signal lamp, and the controller is used for determining an operating state of the signal lamp according to the current signal and controlling the operating state of the signal lamp through the relay unit.

Optionally, the relay unit comprises a first relay, a second relay, and a third relay, the controller is electrically connected to the first relay, the current acquisition unit is electrically connected to the second relay, and both the first relay and the second relay are electrically connected to the signal lamp through the third relay.

Optionally, the driving module further comprises a power switching switch circuit, which inputs a power supply signal and is electrically connected to the relay unit.

Optionally, the controller includes a first controller and a second controller, both of which are electrically connected to the current acquisition unit and the relay unit.

Optionally, the signal lamp control system further comprises a protection circuit, a lightning protection circuit, and an isolation transformer, and the relay unit is electrically connected to the signal lamp through the protection circuit, the lightning protection circuit, and the isolation transformer in turn.

Optionally, a number of the signal lamps is multiple and is the same as a number of relay units and a number of current acquisition units, and the relay units and the current acquisition units are in one-to-one correspondence with the signal lamps.

Optional, the signal lamp is LED signal lamp.

In a second aspect, the embodiments of the invention also provide a signal lamp control method, the signal lamp control method is executed by the controller of the first aspect, and the signal lamp control method comprises:
acquiring a current signal of the signal lamp;
determining a operating state of the signal lamp according to the current signal and controlling the operating state of the signal lamp.

Optionally, determining the operating state of the signal lamp according to the current signal comprises:
determining frequency and amplitude of a current in the current signal based on the current signal;
determining an effective value of the current according to the frequency and amplitude of the current, and determining the state of the signal lamp according to the effective value of the current and a preset current level.

Optionally, controlling the operating state of the signal lamp comprises:
when it is determined that the signal lamp is in a lighting state and a failure occurs, controlling the signal lamp to turn off.

The signal lamp control system and control method provided by the embodiments of the invention comprise: a control module, a driving module and a signal lamp; wherein, the control module comprises a controller, the driving module comprises a relay unit and a current acquisition unit, the relay unit and the current acquisition unit are electrically connected to the controller, and the relay unit and the current acquisition unit are electrically connected to the signal lamp; the current acquisition unit is used for acquiring a current signal of the signal lamp, and the controller is used for determining an operating state of the signal lamp according to the current signal and controlling the operating state of the signal lamp through the relay unit. According to the signal lamp control system and control method provided by the embodiments of the invention, the controller determines an operating state of the signal lamp according to the current signal and controls the operating state of the signal lamp through the relay unit. Compared with the prior control mode in which the operating state of the signal lamp is determined only through the filament relay, the control reliability can be improved.

### BRIEF DESCRIPTION OF THE DRAWINGS

Fig. 1 is a structural block diagram of a signal lamp control system provided by an embodiment of the present invention;
Fig. 2 is a structural block diagram of another signal lamp control system provided by an embodiment of the present invention;
Fig. 3 is a structural block diagram of a controller provided by an embodiment of the present invention;
Fig. 4 is a structural block diagram of another controller provided by an embodiment of the present invention;
Fig. 5 is a flowchart of a signal lamp control method provided by an embodiment of the present invention;
Fig. 6 is a schematic diagram of a current waveform provided by an embodiment of the present invention;
Fig. 7 is a schematic view of the filtered waveform of Fig. 6; and
Fig. 8 is a flowchart for calculating a frequency of duty cycle of a current provided by an embodiment of the present invention.

### DETAILED DESCRIPTION

The invention is described in further detail below with reference to the accompanying drawings and embodiments. It should be understood that the specific embodiments described herein are intended to be illustrative only but not limiting of the invention. In addition, it should be noted that to facilitate the description, only parts of but not all the structures related to the present invention are shown in the appended drawings.

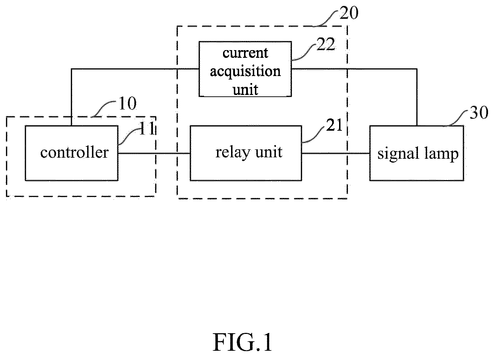

Fig. 1 is a structural block diagram of a signal lamp control system provided by an embodiment of the present invention. Referring to Fig. 1, the signal lamp control system comprises a control module 10, a driving module 20 and a signal lamp 30.

The control module 10 comprises a controller 11, and the driving module 20 comprises a relay unit 21 and a current acquisition unit 22, both of which are electrically connected to the controller 11 and the signal lamp 30. The current acquisition unit 22 is used for acquiring a current signal of the signal lamp 30, and the controller 11 is used for determining an operating state of the signal lamp 30 according to the current signal and controlling the operating state of the signal lamp 30 through the relay unit 21.

Specifically, when it is required to operate the signal lamp 30 and the controller 11 receives an instruction to control the signal lamp 30 operating, the controller 11 may control the relay unit 21 operating, and the operation of the relay unit 21 may connect a path where the power supply and the signal lamp 30 are located, thereby enabling the signal lamp 30 to operate. The current acquisition unit 22 may acquire a current signal of the signal lamp 30 in real time and transmit the acquired current signal to the controller 11. The controller 11 may determine an operating state of the signal lamp according to the current signal. For example, when an effective value of the current is determined to be less than a preset current threshold of luminous threshold according to frequency and amplitude of the current in the current signal, the signal lamp 30 may be determined to have a light off fault. At this time, the signal lamp 30 may be controlled to stop operating and send out corresponding prompts.

The signal lamp control system provided by the embodiment comprises a control module, a driving module and a signal lamp; wherein the control module comprises a controller, the driving module comprises a relay unit and a current acquisition unit, the relay unit and the current acquisition unit are electrically connected to the controller, and the relay unit and the current acquisition unit are electrically connected to the signal lamp; the current acquisition unit is used for acquiring a current signal of the signal lamp, and the controller is used for determining an operating state of the signal lamp according to the current signal and controlling the operating state of the signal lamp through the relay unit. In the signal lamp control system provided by the embodiment, the controller determines the operating state of the signal lamp according to the current signal and controls the operating state of the signal lamp through the relay unit. Compared with the prior control mode in which the operating state of the signal lamp is determined only through the filament relay, the control reliability can be improved.

Optionally, the relay unit 21 comprises a first relay to which the controller 11 is electrically connected, a second relay to which the current acquisition unit 22 is electrically connected, and a third relay through which both the first relay and the second relay are electrically connected to the signal lamp 30.

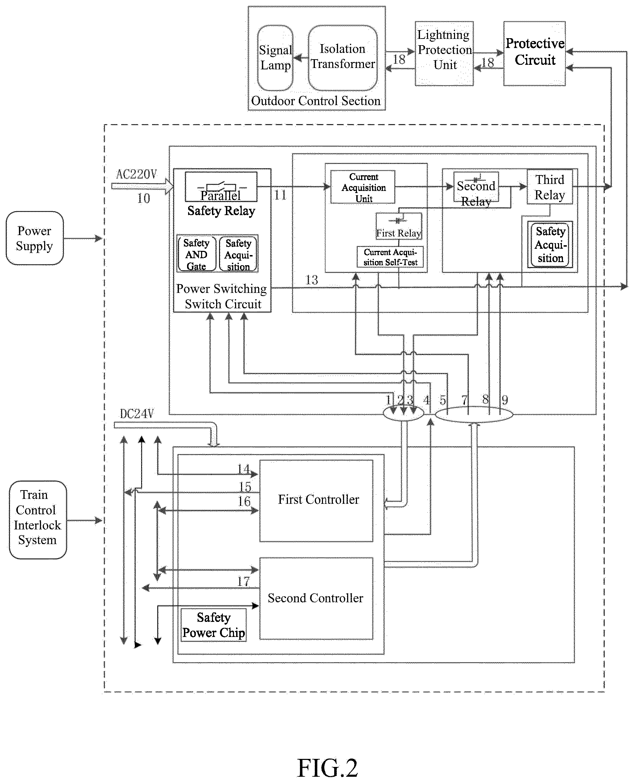

Fig. 2 is an exemplary structural block diagram of another signal lamp control system provided by an embodiment of the present invention. Referring to Fig. 2, the third relay is electrically connected to the signal lamp 30, and both the first relay and the second relay are electrically connected to the third relay. When the third relay is closed, it connects the path where the power supply and the signal lamp 30 are located. The first relay and the second relay may be optocoupler relays to achieve isolation of strong electricity and weak electricity.

Optionally, the driving module 20 further comprises a power switching switch circuit that inputs a power supply signal and is electrically connected to the relay unit 21.

Specifically, referring to Fig. 2, the power switching switch circuit is also electrically connected to the controller 11, which may control the operating state of the power switching switch circuit, and the power switching switch circuit may include a parallel safety relay to realize the transmission control of the power signal.

Optionally, the controller 11 includes a first controller and a second controller, both of which are electrically connected to the current acquisition unit 22 and the relay unit 21.

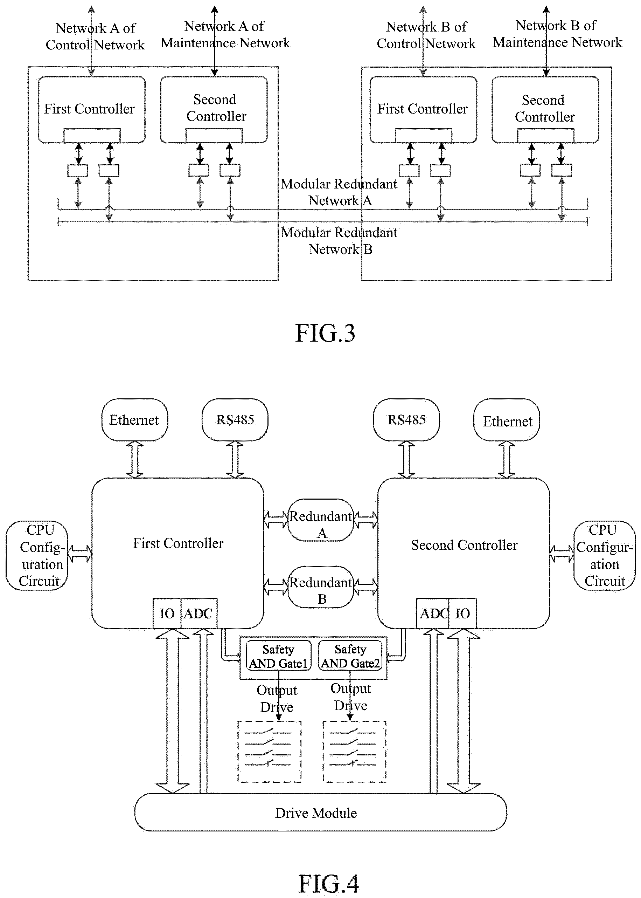

Fig. 3 is a structural block diagram of a controller provided by an embodiment of the present invention, and Fig. 4 is a structural block diagram of another controller provided by an embodiment of the present invention. Referring to Figs. 2-4, the controller 11 adopts a Double 2-Vote-2 architecture, and the controllers between two systems, System I and System II, may communicate. Both the first controller and the second controller may control the relay unit 21, and the operating state of the signal lamp 30 that is determined by the first controller may be mutually verified with the operating state of the signal lamp 30 that is determined by the second controller. When the operating states of the signal lamp 30 determined by the two controllers are different, the two controllers may perform the process of state determination again and send out a prompt; when the operating states of the signal lamp 30 determined by the two controllers are identical, the operating states of the signal lamp 30 may be controlled by the first controller or the second controller to further ensure the control reliability.

Further, taking the controller controlling 8 signal lamps as an example, the driving module is designed as 8 channels, and the channels are in one-to-one correspondence with the signal lamps, one of the channels is illustrated in Fig. 2. The connection line 1 in Fig. 2 is safety acquisition lines (4 for each controller) of the relay of the power switching switch circuit for transmitting the signals of one normal open node and one normal closed node of two parallel safety relays, and the signals are supplied to both controllers at the same time. The connection line 2 is current acquisition lines (8 for each controller) of periodic self-test acquisition circuit for transmitting the current of each signal lamp, which is supplied to both controllers at the same time. The connection line 3 is safety acquisition lines (8 for each controller) of the normal closed nodes of the third relay, the safety acquisition lines for transmitting the signal of one normal closed node of the relay, which is supplied to both controllers at the same time. The connection line 4 is relay control lines (2 for each controller) of the power switching switch circuit for transmitting control signals of two relays in the power switching switch circuit, which are supplied by the two controllers. The connecting line 5 is dynamic code transmission lines (each controller provides two) of the relay nodes of the power switching switch circuit for transmitting the signals of dynamic code transmission of the two relay nodes in the circuit, and four signals of dynamic code transmission are provided by the two controllers. The connecting line 7 is control lines (8 for each second controller) of the optocoupler relay self-test circuit for transmitting the control signals of the optocoupler relay in the circuit, and the two controllers provide level signals for control. The connection line 8 is control lines (8 for each second controller) of the safety relay combination for transmitting the control signals of the safety relays in the circuit, which are controlled by the level signals provided by the two controllers. The connecting line 9 is switch control lines (8 for each first controller) of the optocoupler relay for transmitting the control signals of the optocoupler relay in the circuit, which are controlled by the level signals provided by the two controllers. The connecting line 10 is the 220VAC power input line and the front strong power input line of the power switching switch circuit; the connecting line 11 is a 220VAC power input line, the back strong power input line of the power switching switch circuit is L line, and the connecting line 13 is an input N line. The connection line 14 is a network line for controller configuration communication (RS-485 bus), and the connection line 15 is a control network (Ethernet) line of the first controller; the connecting line 16 is an intra-module communication network line (FlexRay bus); the connection line 17 is a maintenance network (Ethernet) line of the second controller; the connecting line 18 is a connecting line of a safe LED signal lamp satisfying the fault-safety principle, which transmits the signal when the LED is normally lit and the alarm signal when the number of LED faults exceeds the alarm threshold value, and when the LED faults exceed the light off threshold a filament broken signal is transmitted and the LED signal lamp actively cuts off the lighting loop, i.e., the circuit between the power supply and the LED signal lamp, so as to reduce the loop current. The control module evaluates the lighting state, i.e., the operating state (normal, alarm and light-off) of the LED signal lamp by demodulating frequency and amplitude of the current in the lighting loop.

In addition, the controller in Figs. 3 and 4 may be CPU, and the communication between two systems and the communication between two CPUs within the system adopt FlexRay bus interface standard, and the control network communicating with train control interlock system and the maintenance network communicating with human-machine interface layer adopt Ethernet interface standard. CPU can implement the functions of ADC, I/O input and output, FlexRay communication, Ethernet communication and RS485 communication and so on, so as to meet the functional requirements of acquisition, control, communication and so on. The program burning circuit implements burning and online debugging simulation of CPU program. CPU configuration circuit implements the configuration of parameters of CPU ID, TYPE and the like when CPU is powered on and initialized. Ethernet circuit enables the communication between CPU and the maintenance and control networks. RS485 circuit enables communication between CPU and configuration board, and reads configuration information. FlexRay circuit enables the communication between dual CPUs and inter-system communication. ADC implements acquisition of a current of the signal lamp load. The relay level conversion circuit implements the adjustment and rectification of CPU control signals, enhances the driving ability, and simultaneously reduces the influence of relay on CPU. I/O pin state acquisition implements the acquisition of contact states of the relay, so as to accurately evaluate the operating state of the relay.

Optionally, the signal lamp control system further comprises a protective circuit, a lightning protection circuit, and an isolation transformer, and the relay unit 21 is electrically connected to the signal lamp 30 through the protective circuit, the lightning protection circuit, and the isolation transformer in turn.

Specifically, as shown in Fig. 2, the protective circuit is electrically connected to the third relay in the relay unit 21, and the protective circuit, the lightning protection circuit, the isolation transformer and the signal lamp 30 may all be provided outdoors, and other components may be provided indoors. Both the protection circuit and the lightning protection circuit may function as protecting the circuits in which they are located and the devices in the circuits, and the isolation transformer may convert the power supply voltage into the voltage required for operation of the signal lamp 30 to supply power for the signal lamp 30.

Optionally, a number of the signal lamps 30 is multiple and is the same as the number of the relay units 21 and the number of the current acquisition units 22, and both the relay units 21 and the current acquisition units 22 are in one-to-one correspondence with the signal lamps 30.

The controller 11 may control a plurality of signal lamps 30, acquire a current signal of a respective signal lamp 30 through a current acquisition unit 22 corresponding to the respective signal lamp 30, determine that the operating state of the signal lamp 30 is a normal operating state or a failure alarm state, i.e., the above-mentioned light off failure state or safety light off state, according to the current signal, and control the operating state of the respective signal lamp 30 through a relay unit 21 to enable unified control of the respective signal lamps 30.

Optional, the signal lamp is LED signal lamp.

Specifically, the LED signal lamp may detect whether part of the LED beads are damaged, and cut off the circuit autonomously when a damage is detected, thus further ensuring the safety of the circuit.

The signal lamp control system provided by the embodiment comprises a control module, a driving module and a signal lamp; wherein, the control module comprises a controller, the driving module comprises a relay unit and a current acquisition unit, both the relay unit and the current acquisition unit are electrically connected to the controller and the signal lamp; the current acquisition unit is used for acquiring the current signal of the signal lamp, and the controller is used for determining an operating state of the signal lamp according to the current signal and controlling the operating state of the signal lamp through the relay unit. In the signal lamp control system provided by the embodiment, the controller determines the operating state of the signal lamp according to the current signal and controls the operating state of the signal lamp through the relay unit. Compared with the prior control mode in which the operating state of the signal lamp is determined only through the filament relay, the control reliability can be improved.

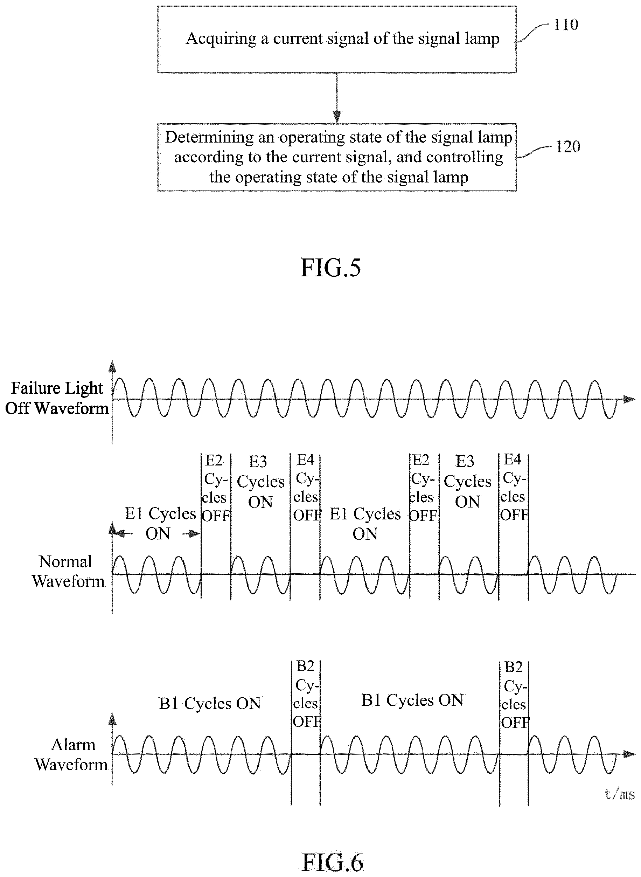

Fig. 5 is a flowchart of a signal lamp control method provided by an embodiment of the present invention. Referring to Fig. 5, the signal lamp control method is performed by a controller according to any of the embodiments of the present invention, the signal lamp control method comprising:
Step 110, a current signal of the signal lamp is acquired.
   where the controller acquires the current signal of the signal lamp through the current acquisition unit, to obtain the current waveform. Fig. 6 is a schematic diagram of a current waveform provided by an embodiment of the present invention. Referring to Fig. 6, the waveform is a 50Hz AC220V alternating current combined waveform.
Step 120, the operating state of the signal lamp is determined according to the current signal, and the operating state of the signal lamp is controlled.

Specifically, referring to Fig. 6, frequency and amplitude of the current in the current signal are determined based on the current signal; an effective value of the current is determined according to the frequency and amplitude of the current, and the state of the signal lamp is determined according to the effective value of the current and a preset current level. Exemplary, when the controller detects a 50Hz sinusoidal current waveform, it is determined that the LED signal lamp cannot operate normally or no LED signal lamp load is connected, and the waveform state of this lamp point, i.e., the operating state of the LED signal lamp, is determined to be a failure light off. The whole combined waveform period of the normal waveform is E1+E2+E3+E4, wherein it is sinusoidal current at E1, disconnected zero current at E2, sinusoidal current at E3 and disconnected zero current at E4. When the controller detects this type of combined waveform, it is determined that the waveform state of the lamp point is normal. The alarm waveform is sinusoidal current at B 1 and disconnected zero current at B2. When the controller detects this type of combined waveform, it is considered that the waveform state of the lamp point gives an alarm. The controller may be trigged to read the value at AD acquisition terminal by timing interrupt every 1 ms. The value is obtained by isolation transforming a voltage signal across a sampling resistor of the lighting loop to form a differential signal to enter into a differential operational amplifier circuit and be acquired by the AD of the controller. In order to determine the operating state of LED signal lamp load, it is required to calculate a frequency of the duty cycle and amplitude of the current of the lighting loop when the lamp is lit. The approach of calculating a current of a lamp point is to calculate an effective value of the current within E1+E2+E3+E4 period and calculate its current level and failure information according to a preset current threshold. The preset current level includes five levels: levels 0-4. The level value of level 0 is less than or equal to a preset current threshold of a luminous threshold, the level value of level 1 is greater than the preset current threshold of the luminous threshold, less than or equal to a preset light off threshold, the level value of level 2 is greater than a preset lower limit of luminous degradation usage, less than or equal to a preset upper limit of luminous degradation usage, the level value of level 3 is greater than a preset lower limit of luminous normal usage, less than or equal to a preset upper limit of luminous normal usage, and the level value of level 4 is greater than the preset upper limit of luminous normal usage. The current levels and fault evaluations are shown in Table 1.

**Table 1 Output and Acquisition Comparison Table**

| Output Command | Current Level | Failure information |
|---|---|---|
| Light off | Level 0 | Normal |
| | Level 1 | No output with returned readings |
| | Level 2 | No output with returned readings |
| | Level 3 | No output with returned readings |
| | Level 4 | No output with returned readings |
| Light on | Level 0 | Light off failure |
| | Level 1 | Light off failure |
| | Level 2 | Degradation usage failure |
| | Level 3 | Normal |
| | Level 4 | Overcurrent failure |

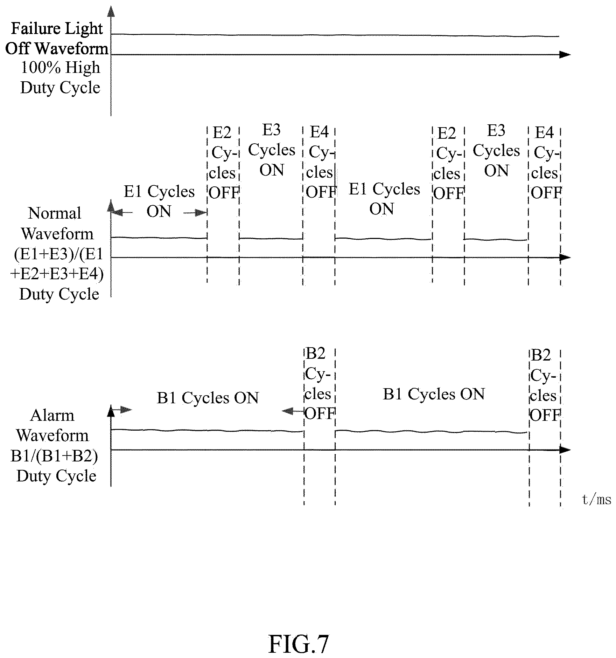

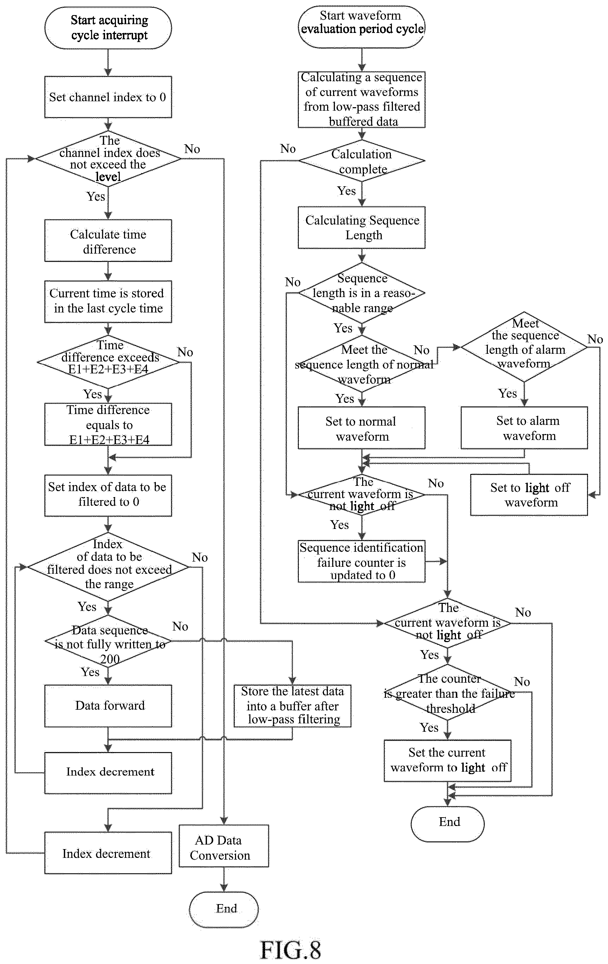

where the output command is light off or light on, that is, the controller controls the operating state of the LED signal lamp to be light off or light off. Fig. 7 is a schematic diagram of the filtered waveform of Fig. 6 and Fig. 8 is a flowchart for calculating a frequency of duty cycle of a current provided by an embodiment of the present invention. Referring to Figs. 7 and 8, the method of calculating the duty cycle of the current is to perform FIR low-pass filtering on current data within E1+E2+E3+E4 period, and identify corresponding edges to obtain the duty cycle of high and low of the current, so as to evaluate which type the waveform is. After the calculation of frequency and amplitude of the current of the lighting loop is completed, the evaluation of acquisition results and failure information of the lamp point is completed through the output and acquisition comparison table of the LED signal lamp. See Table 2 for the details of evaluation comparison table.

**Table 2 Output and Acquisition Comparison Table**

| Output Command | Current Level | Waveform Acquisition Result of Lamp Point | Acquisition Result of Lamp Point | Final Failure Information |
|---|---|---|---|---|
| Light on | Level | Light off | Light off | Light off failure |
| | Level | Light off | Light off | Light off failure |
| | Level | Light off | Light off | Light off failure |
| | Level | Light off | Light off | Light off failure |
| | Level | Light off | Light off | Light off failure |
| | Level | Alarm | Light off | Light off failure |
| | Level | Alarm | Light off | Light off failure |
| | Level | Alarm | Light on | Degradation usage failure |
| | Level | Alarm | Light on | Degradation usage failure |
| | Level | Alarm | Light on | Overcurrent failure |
| | Level | Normal | Light off | Light off failure |
| | Level | Normal | Light off | Light off failure |
| | Level | Normal | Light on | Degradation usage failure |
| | Level | Normal | Light on | Normal |
| | Level | Normal | Light on | Overcurrent failure |
| Light off | Level | Light off | Light off | Normal |
| | Level | Light off | Light off | No output with returned readings |
| | Level | Light off | Light on | No output with returned readings |
| | Level | Light off | Light on | No output with returned readings |
| | Level | Light off | Light on | No output with returned readings |
| | Level | Alarm | Light off | Normal |
| | Level | Alarm | Light off | No output with returned readings |
| | Level | Alarm | Light on | No output with returned readings |
| | Level | Alarm | Light on | No output with returned readings |
| | Level | Alarm | Light on | No output with returned readings |
| | Level | Normal | Lamp-off | Normal |
| | Level | Normal | Lamp-off | No output with returned readings |
| | Level | Normal | Light on | No output with returned readings |
| | Level | Normal | Light on | No output with returned readings |
| | Level | Normal | Light on | No output with returned readings |

The signal lamp control method provided by the embodiment determines the operating state of the signal lamp according to the current signal and controls the operating state of the signal lamp through the relay unit, such as determining the effective value of the current according to the current frequency and amplitude in the current signal and determining the state of the signal lamp according to the effective value of the current and the preset current position. Compared with the prior control mode in which the operating state of the signal lamp is determined only through the filament relay, the control reliability can be improved.

Note that the above are only preferred embodiments of the present invention and the technical principles employed. It will be understood by those skilled in the art that the invention is not limited to the particular embodiments described herein and that various significant changes, readjustments, combinations, and substitutions can be made to those skilled in the art without departing from the scope of the invention. Therefore, although the present invention has been described in more detail by the above embodiments, the present invention is not limited to the above embodiments, but may include more other equivalent embodiments without departing from the inventive concept, and the scope of the present invention is determined by the scope of the appended claims.

## Claims

1. A signal lamp control system, **characterized in that**, comprising a control module, a driving module and a signal lamp;
wherein the control module comprises a controller, the driving module comprises a relay unit and a current acquisition unit, the relay unit and the current acquisition unit are electrically connected to the controller, and the relay unit and the current acquisition unit are electrically connected to the signal lamp; the current acquisition unit is used for acquiring a current signal of the signal lamp, and the controller is used for determining an operating state of the signal lamp according to the current signal and controlling the operating state of the signal lamp through the relay unit.

2. The signal lamp control system of claim 1, **characterized in that**, the relay unit comprises a first relay, a second relay and a third relay, the controller is electrically connected to the first relay, the current acquisition unit is electrically connected to the second relay, the first relay and the second relay are both electrically connected to the signal lamp through the third relay.

3. The signal lamp control system of claim 1, **characterized in that**, the driving module further comprises a power switching switch circuit, which inputs a power supply signal and is electrically connected to the relay unit.

4. The signal lamp control system of claim 1, **characterized in that**, the controller comprises a first controller and a second controller, both of which are electrically connected to the current acquisition unit and the relay unit.

5. The signal lamp control system of claim 1, **characterized in that**, further comprising a protection circuit, a lightning protection circuit, and an isolation transformer, and the relay unit being electrically connected to the signal lamp through the protection circuit, the lightning protection circuit, and the isolation transformer in turn.

6. The signal lamp control system of claim 1, **characterized in that**, a number of the signal lamps is multiple and is the same as a number of the relay units and a number of the current acquisition units, and the relay units and the current acquisition units are in one-to-one correspondence with the signal lamps.

7. The signal lamp control system of claim 1, **characterized in that**, the signal lamp is an LED signal lamp.

8. A signal lamp control method, **characterized in that**, the signal lamp control method is executed by the controller according to any one of claims 1 to 7, the signal lamp control method comprising:
acquiring a current signal of the signal lamp; and
determining an operating state of the signal lamp according to the current signal and controlling the operating state of the signal lamp.

9. The signal lamp control method of claim 8, **characterized in that**, determining the operating state of the signal lamp according to the current signal comprises:
determining frequency and amplitude of a current in the current signal according to the current signal; and
determining an effective value of the current according to the frequency and amplitude of the current, and determining a state of the signal lamp according to the effective value of the current and a preset current level.

10. The signal lamp control method of claim 8, **characterized in that**, controlling the operating state of the signal lamp comprises:
when it is determined that the signal lamp is in a lighting state and a failure occurs, controlling the signal lamp to turn off.
